# EUROPÄISCHE PATENTSCHRIFT

(11) **EP 2 102 374 B1**
(45) Veröffentlichungstag und Bekanntmachung des Hinweises auf die Patenterteilung: **06.03.2013**
(21) Anmeldenummer: 07846953.3
(22) Anmeldetag: 03.12.2007
(51) Int. Cl.: C21C 5/56, F27D 13/00

(54) **VERFAHREN UND VORRICHTUNG ZUM VORWÄRMEN VON STÜCKIGEM GUT**
METHOD AND DEVICE FOR PREHEATING LUMPY MATERIAL
PROCÉDÉ ET DISPOSITIF DE PRÉCHAUFFAGE DE MATÉRIAUX EN PIÈCES

(30) Priorität: 22.12.2006 AT 21432006
(43) Veröffentlichungstag der Anmeldung: 23.09.2009
(73) Patentinhaber: Siemens VAI Metals Technologies GmbH, 4031 Linz (AT)
(72) Erfinder: VULETIC, Bogdan, 40457 Düsseldorf (DE)
(74) Vertreter: Maier, Daniel Oliver
(86) Internationale Anmeldenummer: PCT/EP2007/010464
(87) Internationale Veröffentlichungsnummer: WO 2008/080479

(56) Entgegenhaltungen:
- EP-A- 1 717 210
- BE-A- 667 150
- GB-A- 941 885
- US-A- 3 379 424
- US-A- 4 212 452
- US-A- 6 036 486

## Beschreibung

Die Erfindung betrifft ein Verfahren zur Vorwärmung von stückigem, eisenhaltigen Gut, insbesondere Eisenschwamm oder Eisenschwammbriketts, mit einem Beschickungsbehälter zum Chargieren von stückigem Gut und einem Vorwärmaggregat, in dem das aus dem Beschickungsbehälter chargierte stückige Gut mittels eines heißen reduzierenden Kreislaufgases erwärmt wird, wobei das Kreislaufgas selbst in einem Gaserhitzer erhitzt wird.

Verfahren dieser Art sind aus dem Stand der Technik bekannt, wobei zur Vorwärmung von stückigem eisenhaltigem Gut zumeist reiner Stickstoff verwendet wird, wodurch nur ein kleinerer Teil der im stückigen Gut vorhandenen Eisenoxide, durch Mangel an dem im Eisenschwamm vorhandenem Kohlenstoff und durch eine relativ niedrigere Temperatur des Aufheizgases, reduziert wird. Dadurch bleiben der Eisenoxidgehalt der Schlacke und der Energieverbrauch relativ hoch und die "tap zu tap" Zeiten relativ lang, so dass aufgrund der Eisenverluste in der Schlacke und die Vorwärmung des Gutes auf eine relativ niedrige Temperatur kaum eine Reduzierung der Produktionskosten und Erhöhungen der Leistungen der Stahlwerke erzielt werden.

Die vorliegende Erfindung bezweckt die Vermeidung dieser Nachteile und Schwierigkeiten und stellt sich die Aufgabe, das oben beschriebene Verfahren und eine Vorrichtung zur Vorwärmung vom stückigem Gut dahingehend weiter zu entwickeln, dass das stückige Gut derart vorgewärmt werden kann, dass das im stückigen Gut vorhandene Eisenoxid zu einem hohen Anteil reduziert wird.

Diese Aufgabe wird durch das erfindungsgemäße Verfahren nach den kennzeichnenden Merkmalen des Anspruchs 1 bzw. durch die erfindungsgemäße Vorrichtung nach den kennzeichnenden Merkmalen des Anspruchs 13 gelöst. Dadurch, dass das Vorwärmgut auf höhere Temperaturen in einer reduzierenden Atmosphäre vorgewärmt wird, die ein hohes Reduktionspotential aufweist, verläuft die Reduktion des Eisenoxids schneller. Das im stückigen Gut vorhandene Eisenoxid wird zu einem hohen Anteil reduziert, sodass der spezifische Energieverbrauch und die Verluste an Eisen über Eisenoxid in der Schlacke stark reduziert werden, wodurch sich kürzere "tap zu tap" Zeiten, höhere Leistungen bei nachfolgenden Schmelzaggregaten und im gesamten Stahlwerk ergeben.

Für einen kontinuierlichen Betrieb des Verfahrens wird das Vorwärmaggregat während des Vorwärmens mittels dynamischen Gassperren verschlossen. Dabei ist sicherzustellen, dass die Verbindungsleitungen zu anderen Aggregaten der Anlage während des Betriebes offen sind, wobei keine brennbaren und toxischen Gase in die anderen Aggregate gelangen dürfen. Dieses wird durch Zugabe einer relativ kleinen Stickstoffmenge in die Verbindungsleitungen auf beiden Enden des Vorwärmaggregates erreicht, wodurch in beiden Verbindungsleitungen zu den anderen Aggregaten ein höherer Druck als im Vorwärmaggregat selbst, aufrecht erhalten wird.

Die Erhitzung des Kreislaufgases erfolgt auf Temperaturen von 900 bis 980 °C, insbesondere 910 bis 940 °C. Dieser Parameterbereich hat sich als besonders vorteilhaft erwiesen, da damit die Voraussetzungen für einen schnellen Ablauf der Reduktion des Eisenoxids und einer raschen direkten Feststoffreduktion des im Gut vorhandenen Kohlenstoffs mit Eisenoxid vorliegen.

Nach einer besonderen Ausgestaltung des erfindungsgemäßen Verfahrens wird der stückige Eisenschwamm auf 900 °C, die Eisenschwammbriketts auf 950 °C und Schrott auf 1000 °C erwärmt. Durch diese Vorwärmtemperaturen können die thermodynamischen Bedingungen und die Reaktionskinetik z.B. bei der Reduktion von Wüstit zu Eisen beeinflusst werden, sodass der Eisenoxid-Gehalt der Schlacke verringert und die Eisenausbeute erhöht werden kann.

Bei den vorteilhaften Temperaturen besitzt das eisenhaltige Gut Temperaturen, die nur 10 bis 20 °C unterhalb der "sticking" Temperatur des betreffenden zu erwärmendes Gutes liegen, wodurch die maximale mögliche Einsparung der Energie, erforderlich für das Einschmelzen des Gutes und für einen schnellen Ablauf der Reduktion des Eisenoxids gegeben ist.

Die Höhe der Temperatur des Kreislaufgases vor der Einleitung in das Vorwärmaggregat, richtet sich nach dem zu erwärmenden Gut und seinen Tendenzen zu "Sticking" und Agglomeratbildung.

Das Verfahren eignet sich für das Vorwärmen von kaltem Eisenschwamm oder Eisenschwammbriketts, sowie für die Erwärmung von heißem, stückigen Gut aus einer Heißeisenschwamm- oder Heißbrikettieranlage, dessen Temperatur bei 650 bis 700°C liegt, wodurch die Voraussetzungen für die Reduktion des Eisenoxids und für größere Energieeinsparungen beim Einschmelzen des auf höhere Temperaturen vorgewärmten Gutes gegeben sind.

Eine vorteilhafte Ausgestaltung des erfindungsgemäßen Verfahrens sieht vor, dass der Eisenoxidgehalt des erwärmten stückigen Gutes 1 bis 10 Gew. %, insbesondere 1 bis 5 Gew. % beträgt. Aufgrund dieser Maßnahmen ist es möglich neben dem hohen Metallisationsgrad einen geringen Energieverbrauch bei kurzen Verfahrenszeiten einzuhalten.

Eine spezielle Ausgestaltung des erfindungsgemäßen Verfahrens sieht vor, dass die Erhitzung des Kreislaufgases in einem rekuperativ beheizten Gaserhitzer erfolgt. Der Einsatz eines rekuperativ beheizten Gaserhitzers ermöglicht die Vorwärmung des Kreislaufgases auf hohe Temperaturen, ohne dass dabei Probleme mit abgelagertem Kohlenstoff an den Wänden der Wärmetauscher oder Probleme mit der Festigkeit und Kriechen der Werkstoffe bei hohen Temperaturen auftreten, wie das bei indirekten Wärmetauschern, die auch zur Erhitzung von Kreislaufgasen eingesetzt werden der Fall ist.

Ein weiterer Vorteil ist die so genannte Selbstreinigung des Erhitzers von abgelagertem Kohlenstoff und anderen organischen Komponenten, die sich während der Aufwärmphase des Kreislaufgases, aufgrund dessen Bestandteile, wie Kohlenmonoxid, Methan und anderen organische Komponenten, in dem Gaserhitzer ablagern. Nach der Umschaltung des jeweiligen Gaserhitzers auf das sauerstoffhältige Gas werden diese Komponenten oxidiert und die Wärme, die bei derer Verbrennung entsteht für die Erhitzung der Ausmauerung bzw. des Schüttgutes ausgenutzt.

Eine weitere spezielle Ausgestaltung des erfindungsgemäßen Verfahrens sieht vor, dass die Erhitzung des Kreislaufgases wechselweise in zwei rekuperativ beheizten Gaserhitzern erfolgt. Damit ist ein weitgehend konstantes Verfahren erzielbar.

Nach einer vorteilhaften Ausgestaltung des erfindungsgemäßen Verfahrens wird dem Kreislaufgas zur Einstellung des Reduktionsgrades beim zu erwärmenden Gut Erdgas und/oder ein anderes kohlen- und wasserstoffhaltiges Gas, insbesondere Kohlenmonoxid, Wasserstoff und/oder Methan, zugegeben. Durch diese Maßnahme wird das Reduktionspotential des Kreislaufgases erhöht, sodass eine weitgehende Reduktion der Eisenoxide im Zuge der Erwärmung möglich ist.

Bei geringen Kohlenstoffgehalten des eisenoxidhaltigen Gutes und hohen Eisenoxidgehalt, wird das Eisenoxid, ohne Zugabe vom Erdgas und/oder ohne eines anderen kohlen- und wasserstoffhaltigen Mediums nur zum Teil reduziert, da der durchschnittliche Kohlenstoffgehalt von Eisenschwamm nur bei etwa 1,5 % und der Metallisierungsgrad von Eisenschwamm bei etwa 92 % liegt.

Außerdem kann der vorhandene Kohlenstoff nur zu einem geringen Teil für die Reduktion des Eisenoxids bzw. nur bis zum Gleichgewichtszustand ausgenutzt werden, wobei der größere Teil ungenutzt das Vorwärmeaggregat in Form von Kohlenmonoxid verlässt.

Bei Mangel an Kohlenstoff im eisenhaltigen, stückigen Gut wird dem Kreislaufgas so viel Erdgas und/oder ein anderes kohlen- und wasserstoffhaltiges Gas, insbesondere Kohlenmonoxid, Wasserstoff und Methan zugeführt, dass das gesamte Eisenoxid des stückigen Gutes reduziert werden kann.

Gemäß einer geeigneten Ausgestaltung des erfindungsgemäßen Verfahrens wird Exportgas, Erdgas, Heizöl und/oder ein anderes kohlen- und wasserstoffhaltiges Medium vor der Zugabe zum Kreislaufgas in einem Vergasungsaggregat zum Teil verbrannt bzw. zum Teil vergast und als heißes Gas und zum Teil gespaltenes Gas dem Kreislaufgas zugeführt. Damit kann der Wirkungsgrad des gesamten Verfahrens erhöht werden.

Erfindungsgemäß wird als Oxidationsmedium die Luft oder mit Sauerstoff angereicherte Luft oder Sauerstoff verwendet. Für die Partialoxidation und Spaltung des kohlen- und wasserstoffhaltigen Gases bzw. des Heizöls soll als Oxidationsmedium vorzugsweise Luft oder mit Sauerstoff angereicherte Luft verwendet werden, um einen relativ großen Stickstoffanteil aufrecht zu erhalten, der als Hauptwärmeträger im Kreislaufgas dient.

Nach einer weiteren vorteilhaften Ausgestaltung des erfindungsgemäßen Verfahrens wird dem Kreislaufgas vor den Gaserhitzern Stickstoff zugegeben. Dies dient dazu, um einen relativ hohen Stickstoffanteil im Kreislaufgas aufrecht zu erhalten, sowie die Menge des dem Kreislauf über das Vergasungsaggregat zugeführten Zusatzgases zu reduzieren. Dies ist insbesondere bei niedrigen Eisenoxidgehalten des Vorwärmgutes relevant, da bei der Spaltung des Gases bzw. des Heizöls im Vergasungsaggregat neben Kohlenmonoxid und Wasserstoff auch Kohlendioxid entsteht. Dieser sollte einen gewissen Gehalt im Kreislaufgas nicht überschreiten, um eine Reduktion des Eisenoxids zu ermöglichen.

Erfindungsgemäß wird ebenfalls ein Teil des Kreislaufgases entnommen und dem für die Erwärmung des Gaserhitzers verwendeten Brennstoff zugeführt. Dies ist vorteilhaft, um die Reduktion des Eisenoxids im Vorwärmgerät aufrecht zu erhalten und damit es nicht zur Anreicherung des Kreislaufgases mit dem durch die Reduktion des Eisenoxids gebildeten Kohlendioxid kommt.

Nach einer vorteilhaften Ausgestaltung des erfindungsgemäßen Verfahrens erfolgt die Beschickung des Beschickungsbehälters und/oder des Vorwärmaggregates kontinuierlich, sodass ein kontinuierlicher Betrieb einer Eisenschwammproduktions- oder einer Vorwärmgutaufbereitungsanlage ermöglicht wird.

Die erfindungsgemäße Vorrichtung umfasst einen Beschickungsbehälter zum Chargieren von stückigem Gut und ein Vorwärmaggregat, zur Erwärmung des aus dem Beschickungsbehälter chargierten stückigen Gutes mittels eines heißen reduzierenden Kreislaufgases und zumindest einem Gaserhitzer. Der Gaserhitzer ist rekuperativ beheizbar. Für einen kontinuierlichen Betrieb der Anlage können zwei zyklisch betriebene Gaserhitzern zur Erhitzung des Kreislaufgases vorgesehen werden. Das Vorwärmaggregat ist über eine Zuleitung mit dem Beschickungsbehälter einerseits und mit einer Austragsvorrichtung über eine Ablaufleitung andererseits verbunden und mittels Ventilen und/oder mittels dynamischen Gassperren gasdicht von beiden Aggregaten trennbar. Diese Ventile können bei dem Ausfall von dynamischen Gassperren und beim Abstellen der Anlage automatisch geschlossen werden, um zu vermeiden, dass brennbare und/oder toxische Gase aus dem Vorwärmaggregat in andere Aggregate gelangen.

Erfindungsgemäß kann der Gaserhitzer als ein mit Feuerfesteinbauten ausgestatteter Gaserhitzer oder als ein Schüttgutregenerator ausgeführt werden, wobei auf bewährte Technologien und Anlagen zurückgegriffen werden kann.

Nach einer vorteilhaften Ausgestaltung der erfindungsgemäßen Vorrichtung weist das Vorwärmaggregat eine Ablaufleitung auf, wobei der Querschnitt der Zuleitung zumindest doppelt so groß wie der Querschnitt der Ablaufleitung ist. Dadurch wird die Möglichkeit geschaffen das vorgewärmte Gut chargenweise auszutragen, also in definierten abgeschlossenen Mengen, ohne dass das Materialniveau im Vorwärmbehälter abfällt. Somit kann selbst bei einem für ein Nachfolgeaggregat vorteilhaften chargenweisen Abzug des vorgewärmten Gutes die erfindungsgemäße Anlage kontinuierlich betrieben werden. Dies bietet den Vorteil einer besseren Steuerbarkeit und eines stabileren Prozesses bzw. eines stabileren Betriebes der Anlage.

Eine weitere vorteilhafte Ausgestaltung der erfindungsgemäßen Vorrichtung sieht vor, dass das Vorwärmaggregat eine Ringleitung mit mehreren Gaseinlässen zum

Einleiten des Kreislaufgases aufweist. Durch das Einleiten des Kreislaufgases in das Vorwärmaggregat über eine Ringleitung und über mehrere Einlässe im unteren Bereich des Vorwärmaggregates wird gewährleistet, dass das heiße Kreislaufgas nahezu gleichmäßig über den gesamten Querschnitt verteilt und das eisenhaltige Gut gleichmäßig vorgewärmt wird.

Die erfindungsgemäße Vorrichtung kann gemäß einer speziellen Ausgestaltung eine Wägeinrichtung zum Austrag des erwärmten stückigen Gutes aus dem Vorwärmaggregat aufweisen. Dies ermöglicht eine kontrollierte und gleichmäßige Beschickung eines nachfolgenden Aggregates z.B. eines Schmelzaggregates, das mit dem vorgewärmtem stückigem Gut beschickt wird.

Nach einer weiteren bevorzugter Ausführungsform ist eine Verbrennungskammer zur Verbrennung von gasförmigen Energieträgern, insbesondere Exportgas, Erdgas oder Heizöl vorgesehen, wobei das Verbrennungsgas zur Beheizung des Gaserhitzers genutzt wird.

Nach einer speziellen Ausgestaltung der erfindungsgemäßen Vorrichtung ist ein Wäscher zur Reinigung des Kreislaufgases vorgesehen, der mit dem Behandlungsaggregat und dem Gaserhitzer verbunden ist. Dies ist erforderlich, um das Kreislaufgas auf die erforderliche Reinheit zu bringen, damit es nicht zu Ablagerungen z.B. in einem nachgeschalteten Gebläse oder anschließenden Aggregaten kommt.

Erfindungsgemäß ist ein Wäscher zur Reinigung des Kreislaufgases vorgesehen, der mit dem Behandlungsaggregat und dem Gaserhitzer verbunden ist. Damit kann die Gasströmung im Gaskreislauf aufrechterhalten werden.

Erfindungsgemäß ist weiters der Wäscher über eine Leitung, die eine Durchflussregelarmatur umfasst, mit der Brennkammer verbunden. Über diese Leitung wird ein Teil des Kreislaufgases nach dem Wäscher abgezweigt und der Brennkammer zugeführt, um den im Vorwärmaggregat durch Reduktion des Eisenoxids und den über das Vergasungsaggregat zugeführten Kohlendioxid aus dem Kreislauf auszuschleusen, damit die Reduktion des kontinuierlich zugeführten eisen- und eisenoxidhaltigen stückigen Gutes aufrecht erhalten wird.

Im Falle eines chargeweisen Austrags des erwärmten stückigen Gutes kann anstelle der Wägeeinrichtung ein Austragbehälter installiert werden, aus dem das vorgewärmte Gut kontinuierlich oder chargenweise dem Schmelzaggregat zugeführt wird. Die Erfindung wird am anhand der folgenden Figuren beispielhaft und nicht einschränkend näher beschrieben.

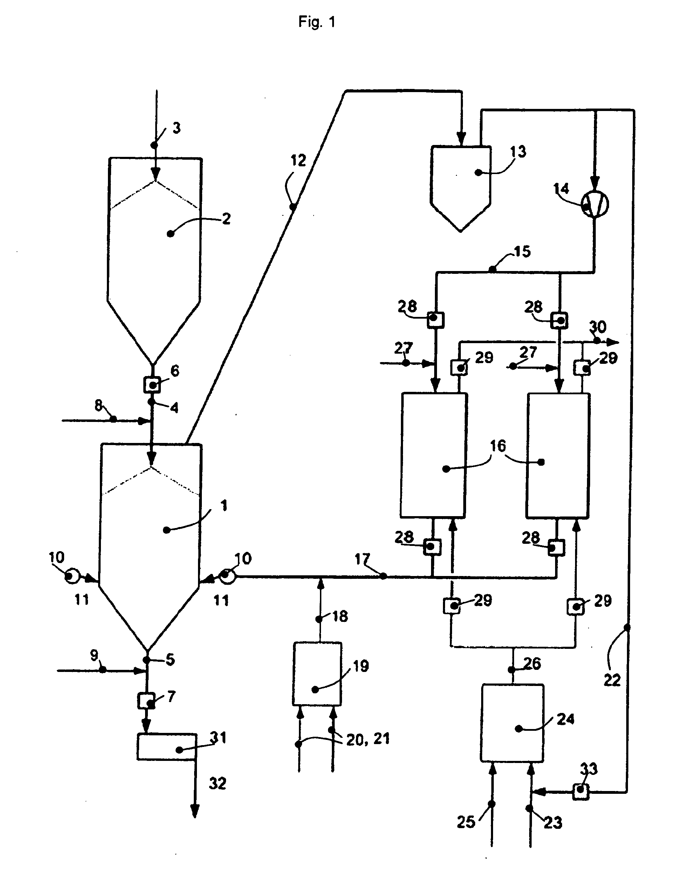

Fig. 1: zeigt die erfindungsgemäße Anlage zur Vorwärmung von stückigem Gut in einer möglichen Ausführung.

Das in Fig. 1 dargestellte Ausführungsbeispiel bezieht sich auf die Vorwärmung von Eisenschwamm, Eisenschwammbriketts aus einer Direktreduktionsanlage oder von aufbereitetem Schrott. Kern der Anlage ist das Vorwärmaggregat 1, welches mit stückigem Gut aus dem Beschickungsbehälter 2 über die Leitung 3 beschickt wird.

Das Vorwärmaggregat 1 wird unter leichtem Überdruck betrieben damit ein Eindringen von Luft vermieden wird. Die Zuleitung 4 zum Beschickungsbehälter 2 und die Ablaufleitung 5 sind mit Ventilen 6 und 7 und/oder mit dynamischen Gassperren 8 und 9 versehen, um das Ausströmen von brennbaren und giftigen Gasen, die beim Vorwärmen des stückigen Gutes im Vorwärmeaggregat 1 entstehen zu vermeiden.

Das Vorwärmaggregat 1 arbeitet nach dem Gegenstromprinzip. Das heiße Kreislaufgas (Heizgas) wird über die Ringleitung 10 und über mehrere Gaseinlässe 11 im unteren Bereich des Vorwärmaggregates 1 eingeleitet und im oberen Bereich über die Leitung 12 abgeführt, in einem Wäscher 13 gereinigt und abgekühlt, von einem Kompressor 14 auf den erforderlichen Druck gebracht und über eine Leitung 15 einem von zwei rekuperativ arbeitenden Gaserhitzern 16 zugeführt. Hier wird das Kreislaufgas zunächst aufgeheizt. Dann erfolgt die Zufuhr kohlen- und wasserstoffreicher heißer Gase über eine Leitung 18, wobei diese Gase in einem Vergasungsaggregat 19 durch partielle Oxidation kohlen- und wasserstoffreicher Medien erzeugt werden. Diese Medien werden über Leitung 20 und die Oxidationsmittel über Leitung 21 dem Vergasungsaggregat 19 zugeführt.

Mittels der Leitung 17 wird das Gemisch aus gereinigtem Kreislaufgas und den kohlen- und wasserstoffreichen heißen Gasen in die Ringleitung 10 eingeleitet.

Zum Aufheizen der rekuperativ arbeitenden Gaserhitzer 16 wird ein Teil des Kreislaufgases, vor oder nach dem Kompressor 14 abgezweigt und über die Leitung 22, die mit einer Durchflussregelarmatur 33 versehen ist, in die Leitung 23 eingeleitet, über die das Verbrennungsgas der Brennkammer 24 zugeführt wird. Die Verbrennung vom Verbrennungs- und von abgezweigtem Kreislaufgas erfolgt durch Zugabe von Oxidationsmedium über die Leitung 25. Das Aufheizgas von der Brennkammer 24 wird abwechselnd einem der beiden Gaserhitzer 16 über die Leitung 26 zugeführt und nach Abgabe der Wärme über die Leitung 30 abgeführt.

In Abhängigkeit vom Eisenoxidgehalt des stückigen Gutes wird dem Kreislaufgas, direkt vor dem rekuperativ arbeitenden Gaserhitzer 16 Stickstoff über die Leitung 27 zugeführt. Die beiden rekuperativ arbeitenden Gaserhitzer 16 arbeiten im zyklischen Betrieb. Während der Zeit in der der einer der Gaserhitzer 16 zur Erwärmung des Kreislaufgases eingesetzt wird, werden die Einbauten bzw. das Schüttgut des anderen Gaserhitzers aufgeheizt. Die zyklische Umschaltung des Kreislaufgases auf den anderen Gaserhitzer erfolgt durch die Umschaltarmaturen 28 und die des Aufheizgases durch die Umschaltarmaturen 29.

Das vorgewärmte Gut kann kontinuierlich über eine Wägeinrichtung 31 und Leitung 32 oder chargenweise über einen Austragsbehälter, der in Fig. 1 nicht dargestellt ist, einem Schmelzaggregat, welches in Fig. 1 ebenfalls nicht dargestellt ist, zugeführt werden.

## Patentansprüche

1. Verfahren zum Vorwärmen von stückigem Eisenschwamm und/oder Eisenschwammbriketts und/oder Schrott mit einem Beschickungsbehälter zum Chargieren von stückigem Gut und einem Vorwärmaggregat, in dem das aus dem Beschickungsbehälter chargierte stückige Gut mittels eines heißen reduzierenden Kreislaufgases erwärmt wird/werden, wobei das Kreislaufgas selbst in einem Gaserhitzer erhitzt wird, **dadurch gekennzeichnet, dass** der Eisenschwamm und/oder Eisenschwammbriketts und/oder Schrott auf so hohe Temperaturen erwärmt wird/werden, dass enthaltenes Eisenoxid weitgehend zu metallischem Eisen reduziert wird, wobei das Vorwärmaggregat für einen kontinuierlichen Betrieb des Verfahrens während des Vorwärmens mittels dynamischen Gassperren verschlossen wird, wobei die Erhitzung des Kreislaufgases auf Temperaturen von 900 bis 980 °C, insbesondere 910 bis 940 °C erfolgt.

2. Verfahren nach Anspruch 1, **dadurch gekennzeichnet, dass** der stückige Eisenschwamm auf 900 °C, die Eisenschwammbriketts auf 950 °C und Schrott auf 1000 °C erwärmt wird.

3. Verfahren nach dem Anspruch 1, **dadurch gekennzeichnet, dass** der Eisenoxidgehalt des erwärmten stückigen Gutes 1 bis 10 Gew. %, insbesondere 1 bis 5 Gew. % beträgt.

4. Verfahren nach einem der Ansprüchen 1 bis 2, **dadurch gekennzeichnet, dass** die Erhitzung des Kreislaufgases in einem rekuperativ beheizten Gaserhitzer erfolgt.

5. Verfahren nach einem der obigen Ansprüche, **dadurch gekennzeichnet, dass** die Erhitzung des Kreislaufgases wechselweise in zwei rekuperativ beheizten Gaserhitzern erfolgt.

6. Verfahren nach dem Anspruch 1, **dadurch gekennzeichnet, dass** dem Kreislaufgas zur Einstellung des Reduktionsgrades Erdgas und/oder ein anderes kohlen- und wasserstoffhaltiges Gas, insbesondere Kohlenmonoxid, Wasserstoff und/oder Methan, zugegeben wird.

7. Verfahren nach den Ansprüchen 1 und 5, **dadurch gekennzeichnet, dass** Exportgas, Erdgas, Heizöl und/oder ein anderes kohlen- und wasserstoffhaltiges Medium vor der Zugabe zum Kreislaufgas in einem Vergasungsaggregat zum Teil verbrannt, zum Teil vergast und als heißes Gas und zum Teil gespaltenes Gas dem Kreislaufgas zugeführt wird.

8. Verfahren nach einem der obigen Ansprüche, **dadurch gekennzeichnet, dass** als Oxidationsmedium die Luft oder mit Sauerstoff angereicherte Luft oder Sauerstoff verwendet wird.

9. Verfahren nach einem der obigen Ansprüche, **dadurch gekennzeichnet, dass** dem Kreislaufgas vor den Gaserhitzern Stickstoff zugegeben wird.

10. Verfahren nach einem der obigen Ansprüche, **dadurch gekennzeichnet, dass** ein Teil des Kreislaufgases entnommen und dem für die Erwärmung des Gaserhitzers verwendeten Brennstoff zugeführt wird.

11. Verfahren nach dem Anspruch 1, **dadurch gekennzeichnet, dass** die Beschickung des Beschickungsbehälters und/oder des Vorwärmaggregates kontinuierlich erfolgt.

12. Vorrichtung zum Vorwärmen von stückigem Eisenschwamm mit einem Beschickungsbehälter (2) zum Chargieren des stückigen Eisenschwamms und einem Vorwärmaggregat (1), zur Vorwärmung des aus dem Beschickungsbehälter chargierten stückigen Eisenschwamms mittels eines heißen reduzierenden Kreislaufgases, und zumindest einem Gaserhitzer (16) zur Erwärmung des Kreislaufgases, **dadurch gekennzeichnet, dass** der Gaserhitzer (16) rekuperativ beheizbar ist und das Vorwärmaggregat (1) über eine Zuleitung (4) mit dem Beschickungsbehälter (2) einerseits und mit einer Austragsvorrichtung über eine Ablaufleitung (5) andererseits verbunden und mittels Ventilen (6, 7) und mittels dynamischen Gassperren (8, 9) gasdicht von beiden Aggregaten trennbar ist, wobei der Querschnitt der Zuleitung (4) zumindest doppelt so groß wie der Querschnitt der Ableitung (5) ist.

13. Vorrichtung nach Anspruch 12, **dadurch gekennzeichnet, dass** der Gaserhitzer (16) ein mit Feuerfesteinbauten ausgestatteter Gaserhitzer oder ein Schüttgutregenerator ist.

14. Vorrichtung nach einem der Ansprüche 12 bis 13, **dadurch gekennzeichnet, dass** das Vorwärmaggregat (1) eine Ringleitung (10) mit mehreren Gaseinlässen (11) zum Einleiten des Kreislaufgases aufweist.

15. Vorrichtung nach einem der Ansprüche 12 bis 14, **dadurch gekennzeichnet, dass** eine Wägeinrichtung (31) zum Austrag des erwärmten stückigen Gutes aus dem Vorwärmaggregat (1) vorgesehen ist.

16. Vorrichtung nach einem der Ansprüche 12 bis 15, **dadurch gekennzeichnet, dass** eine Verbrennungskammer (24) zur Verbrennung von gasförmigen Energieträgern, insbesondere Exportgas, Erdgas oder Heizöl vorgesehen ist, wobei das Verbrennungsgas zur Beheizung des Gaserhitzers (16) genutzt wird.

17. Vorrichtung nach einem der Ansprüche 12 bis 16, **dadurch gekennzeichnet, dass** ein Wäscher (13) zur Reinigung des Kreislaufgases vorgesehen ist, der mit dem Behandlungsaggregat (1) und dem Gaserhitzer (16) verbunden ist.

18. Vorrichtung nach Anspruch 17, **dadurch gekennzeichnet, dass** ein Kompressor (14) vorgesehen ist, der mit dem Wäscher (13) und dem Gaserhitzer (16) verbunden ist.

19. Vorrichtung nach Anspruch 17 oder 18, **dadurch gekennzeichnet, dass** der Wäscher über eine Leitung (22), die eine Durchflussregelarmatur (33) umfasst, mit der Brennkammer (24) verbunden ist.

## Claims

1. Method for the preheating of lumpy sponge iron and/or sponge iron briquets and/or scrap, with a feed container for the charging of lumpy stock and with a preheating assembly in which the lumpy stock charged from the feed container is heated by means of a hot reducing recycling gas, the recycling gas itself being heated in a gas heater, **characterized in that** the lumpy sponge iron and/or sponge iron briquets and/or scrap is/are heated to such high temperatures that iron oxide contained is largely reduced to metallic iron, the preheating assembly being closed by means of dynamic gas locks during preheating for the purpose of a continuous operation of the method, the heating of the recycling gas taking place to temperatures of 900 to 980°C, in particular 910 to 940°C.

2. Method according to Claim 1, **characterized in that** the lumpy sponge iron is heated to 900°C, the sponge iron briquets to 950°C and scrap to 1000°C.

3. Method according to Claim 1, **characterized in that** the iron oxide content of the heated lumpy stock is 1 to 10% by weight, in particular 1 to 5% by weight.

4. Method according to one of Claims 1 to 2, **characterized in that** the heating of the recycling gas takes place in a recuperatively heated gas heater.

5. Method according to one of the above claims, **characterized in that** the heating of the recycling gas takes place alternately in two recuperatively heated gas heaters.

6. Method according to Claim 1, **characterized in that** natural gas and/or another carbon-containing and hydrogen-containing gas, in particular carbon monoxide, hydrogen and/or methane, is added to the recycling gas in order to set the degree of reduction.

7. Method according to Claims 1 and 5, **characterized in that** export gas, natural gas, fuel oil and/or another carbon-containing and hydrogen-containing medium is partialy burnt in a gasification assembly, before addition to the recycling gas, is partially gasified and supplied as hot gas and partially cracked gas to the recycling gas.

8. Method according to one of the above claims, **characterized in that** air or oxygen-enriched air or oxygen is used as oxidation medium.

9. Method according to one of the above claims, **characterized in that** nitrogen is added to the recycling gas upstream of the gas heaters.

10. Method according to one of the above claims, **characterized in that** part of the recycling gas is extracted and supplied to the fuel used for heating the gas heater.

11. Method according to Claim 1, **characterized in that** the feeding of the feed container and/or of the preheating assembly takes place continuously.

12. Apparatus for the preheating of lumpy sponge iron, with a feed container (2) for the charging of the lumpy sponge iron and with a preheating assembly (1), for preheating the lumpy sponge iron, charged from the feed container, by means of a hot reducing recycling gas, and with at least one gas heater (16) for heating the recycling gas, **characterized in that** the gas heater (16) can be heated recuperatively, and the preheating assembly (1) is connected to the feed container (2) via a supply line (4), on the one hand, and to a discharge device via an outflow line (5), on the other hand, and can be separated, gas-tight, from both assemblies by means of valves (6, 7) and by means of dynamic gas locks (8, 9), the cross section of the supply line (4) being at least twice as large as the cross section of the outflow line (5).

13. Apparatus according to Claim 12, **characterized in that** the gas heater (16) is a gas heater equipped with refractory fittings or is a bulk material regenerator.

14. Apparatus according to one of Claims 12 to 13, **characterized in that** the preheating assembly (1) has a ring line (10) with a plurality of gas inlets (11) for introducing the recycling gas.

15. Apparatus according to one of Claims 12 to 14, **characterized in that** a weighing device (31) for discharging the heated lumpy stock from the preheating assembly (1) is provided.

16. Apparatus according to one of Claims 12 to 15, **characterized in that** a combustion chamber (24) for the combustion of gaseous energy carriers, in particular export gas, natural gas or fuel oil, is provided, the combustion gas being utilized for heating the gas heater (16).

17. Apparatus according to one of Claims 12 to 16, **characterized in that** a scrubber (13) for cleaning the recycling gas is provided, which is connected to the treatment assembly (1) and to the gas heater (16).

18. Apparatus according to Claim 17, **characterized in that** a compressor (14) is provided which is connected to the scrubber (13) and to the gas heater (16).

19. Apparatus according to Claim 17 or 18, **characterized in that** the scrubber is connected to the combustion chamber (24) via a line (22) which comprises a throughflow regulation fitting (33).

## Revendications

1. Procédé de préchauffage de morceaux de mousse de fer, de briquettes de mousse de fer et/ou de ferrailles à l' aide d'un récipient d'alimentation qui charge les morceaux de matière et d'un ensemble de préchauffage dans lequel les morceaux de matière chargés en provenance du récipient d'alimentation sont chauffés au moyen d'un gaz chaud réducteur recirculé, le gaz de recirculation étant lui-même chauffé dans un réchauffeur de gaz,
**caractérisé en ce que**
la mousse de fer, les briquettes de mousse de fer et/ou les ferrailles sont chauffés à une température suffisamment élevée pour que l'oxyde de fer qu'elles contiennent soit largement réduit en fer métallique, l'ensemble de préchauffage étant fermé par des barrières à gaz dynamiques pendant le préchauffage en vue d'assurer un fonctionnement continu du procédé, le chauffage du gaz de recirculation s'effectuant à une température comprise entre 900 et 980°C et en particulier de 910 à 940°C.

2. Procédé selon la revendication 1, **caractérisé en ce que** les morceaux de mousse de fer sont chauffés à 900°C, les briquettes de mousse de fer à 250°C et les ferrailles à 1 000°C.

3. Procédé selon la revendication 1, **caractérisé en ce que** la teneur en oxyde de fer des morceaux de produit chauffé est comprise entre 1 et 10 % en poids et en particulier entre 1 et 5 % en poids.

4. Procédé selon l'une des revendications 1 et 2, **caractérisé en ce que** le chauffage du gaz de recirculation s'effectue dans un réchauffeur de gaz chauffé par récupération.

5. Procédé selon l'une des revendications précédentes, **caractérisé en ce que** le chauffage du gaz de recirculation d'effectue en alternance dans deux réchauffeurs de gaz chauffés par récupération.

6. Procédé selon la revendication 1, **caractérisé en ce que** pour établir le taux de réduction, du gaz naturel ou un autre gaz contenant du carbone et de l'hydrogène, en particulier du monoxyde de carbone, de l'hydrogène et/ou du méthane, sont ajoutés au gaz de recirculation.

7. Procédé selon l'une des revendications 1 et 5, **caractérisé en ce qu'**avant leur addition au gaz de recirculation, du gaz exporté, du gaz naturel, du fioul et/ou un autre fluide contenant du carbone et de l'hydrogène sont brûlés en partie dans un ensemble de gazéification, sont partiellement gazéifiés et sont apportés au gaz de recirculation sous la forme de gaz chaud et de gaz partiellement dissocié.

8. Procédé selon l'une des revendications précédentes, **caractérisé en ce qu'**il utilise comme agent d'oxydation l'air, de l'air enrichi en oxygène ou de l'oxygène.

9. Procédé selon l'une des revendications précédentes, **caractérisé en ce que** de l'azote est ajouté au gaz de recirculation en amont des réchauffeurs à gaz.

10. Procédé selon l'une des revendications précédentes, **caractérisé en ce qu'**une partie du gaz de recirculation est prélevée et amenée au combustible utilisé pour chauffer le réchauffeur à gaz.

11. Procédé selon la revendication 1, **caractérisé en ce que** l'alimentation du récipient d'alimentation et/ou de l'ensemble de préchauffage s'effectue en continu.

12. Dispositif de préchauffage de morceaux de mousse de fer, présentant
un récipient d'alimentation (2) qui assure le chargement des morceaux de mousse de fer et un ensemble de préchauffage (1) qui préchauffe les morceaux de mousse de fer chargés en provenance du récipient d'alimentation au moyen d'un gaz chaud réducteur recirculé et
au moins un réchauffeur (16) de gaz qui réchauffe le gaz de recirculation,
**caractérisé en ce que**
le réchauffeur (16) de gaz peut être chauffé par récupération et
**en ce que** l'ensemble de préchauffage (1) est relié d'une part par un conduit (4) au récipient d'alimentation (2) et d'autre part par un conduit d'évacuation (5) à un dispositif d'extraction et peut être séparé de manière étanche aux gaz des deux ensembles au moyen de soupapes (6, 7) et de barrières à gaz dynamiques (8, 9), la section transversale du conduit d'amenée (4) représentant au moins le double de la section transversale du conduit d'évacuation (5).

13. Dispositif selon la revendication 12, **caractérisé en ce que** le réchauffeur (16) à gaz est un réchauffeur à gaz doté de garnitures réfractaires ou un générateur de produits en vrac.

14. Dispositif selon l'une des revendications 12 à 13, **caractérisé en ce que** l'ensemble de préchauffage (1) présente un conduit annulaire (10) doté de plusieurs entrées de gaz (11) permettant d'y introduire le gaz de recirculation.

15. Dispositif selon l'une des revendications 12 à 14, **caractérisé en ce qu'**un dispositif de pesage (31) est prévu pour extraire les morceaux de produits chauffés hors de l'ensemble de préchauffage (1).

16. Dispositif selon l'une des revendications 12 à 15, **caractérisé en ce qu'**une chambre de combustion (24) est utilisée pour brûler des vecteurs énergétiques gazeux, en particulier du gaz supporté, du gaz naturel ou du fioul, le gaz de combustion étant utilisé pour chauffer le réchauffeur (16) de gaz.

17. Dispositif selon l'une des revendications 12 à 16, **caractérisé en ce qu'**un laveur (13) qui épure le gaz de recirculation est prévu et est relié à l'ensemble de traitement (1) et au réchauffeur (16) de gaz.

18. Dispositif selon la revendication 17, **caractérisé en ce qu'**il présente un compresseur (14) relié au laveur (13) et au réchauffeur (16) de gaz.

19. Dispositif selon les revendications 17 ou 18, **caractérisé en ce que** le laveur est relié à la chambre de combustion (24) par un conduit (22) qui présente un mécanisme (33) de régulation du débit.
